# EUROPEAN PATENT SPECIFICATION

(11) **EP 3 352 285 B1**
(45) Date of publication and mention of the grant of the patent: **27.04.2022**
(21) Application number: 16845929.5
(22) Date of filing: 09.09.2016
(51) Int. Cl.: H01M 10/12, H01M 50/411, H01M 50/437, H01M 50/44, H01M 50/449, H01M 50/463, H01M 50/541

(54) **LEAD STORAGE BATTERY**
BLEIAKKUMULATOR
BATTERIE AU PLOMB

(30) Priority: 18.09.2015 JP 2015185523
(43) Date of publication of application: 25.07.2018
(73) Proprietor: GS Yuasa International Ltd., Kyoto-shi, Kyoto 601-8520 (JP)
(72) Inventor: TACHIKAWA, Shuhei, Kyoto-shi Kyoto 601-8520 (JP)
(74) Representative: Isarpatent
(86) International application number: PCT/JP2016/004112
(87) International publication number: WO 2017/047054

(56) References cited:
- JP-A- H0 495 342
- JP-A- H1 126 012
- JP-A- 2002 042 776
- JP-A- 2002 075 325
- JP-A- 2011 181 436
- JP-U- 3 118 439
- US-A- 306 405

## Description

### TECHNICAL FIELD

The present invention relates to a lead-acid battery, and more particularly to a lead-acid battery which suppresses permeation short-circuiting.

### BACKGROUND ART

The usages where a lead-acid battery is used in a partial state of charge (PSOC) have been increasing in number.

For example, in an idling stop vehicle (IS), by stopping an engine each time the vehicle is stopped, a fuel consumption amount is reduced, and the engine is operated again with the supply of electricity from a storage battery at the time of starting the vehicle. Accordingly, the storage battery is used in a partial state of charge. Such a situation is not limited to the use of the storage battery in the IS, and charging of electricity to a storage battery is suppressed for enhancing energy efficiency. Further, electricity to be taken out from a storage battery has been increasing and hence, cases are increasing in number where the storage battery is brought into a partial state of charge.

In a lead-acid battery, a stratification phenomenon occurs where a nitric acid is consumed at both plates and water is generated in a positive electrode plate at the time of discharging electricity, and the nitric acid is discharged from both plates and the nitric acid having high specific gravity is accumulated at a lower portion of the lead-acid battery at the time of charging electricity. When an electricity charge amount is sufficient (overcharge), an electrolyte solution is agitated by a gas generated from the plates at a terminal period of charging electricity so that difference in concentration is solved.

However, in a lead-acid battery used in a PSOC state, an overcharge amount is small and hence, difference in concentration between upper and lower portions of the lead-acid battery is hardly solved resulting in the occurrence of stratification. When an electrolyte solution is stratified, a charge-discharge reaction becomes non-uniform and hence, sulfation (accumulation of nitrate) progresses whereby a positive electrode is softened or a life performance of the lead-acid battery is lowered.

Patent document 1 describes the invention "whose object is to provide a lead-acid battery which has a long lifetime even when used under severe conditions such as repetitions of deep charge and discharge, which has a large discharge capacity, and is especially suitable for an automobile adopting new systems such as an idling stop and prevention of overcharge" (paragraph [0010]). Patent document 1 describes "A lead-acid storage battery where an plate group in which a positive electrode plate and a negative electrode plate using a Pb-Ca based alloy substrate are alternately laminated via separators is inserted into a container, wherein the separator is of a felt state, has area density of 20 to 100 g/m2, and has a thickness when a pressure of 20 kPa is applied is 0.1 to 0.8 mm, at least one of the positive electrode plate and the negative electrode plate is housed in a bag made of synthetic resin, and the plate group is inserted into the container at a pressing degree of 10 to 25 kPa." (Claim 1)

As an embodiment 1 of this lead-acid battery, there is the description that "a negative non-converted plate which is formed by a known method and is accommodated in a synthetic resin made bag (bag separator) having a porous polyethylene sheet having a thickness of 0.25 mm as a base is stacked on a positive non-converted plate by way of a glass mat (felt-like separator), and a group of plates is formed by welding the plates of this stacked body to each other by a COS method. As such a glass mat, a glass mat having area density of 20 to 100 g/m2 and thickness of 0.1 to 0.8 mm when a pressure of 20 kPa is applied is used. As the felt-like separator, a glass mat made of an unwoven fabric of fine glass fibers is used" (paragraphs [0020], [0021]).

Patent document 1 describes that, in such a lead-acid battery, the glass mat is inserted with a proper compression degree, and the glass mat has proper area density and proper thickness at the time of applying pressure. Accordingly, softening and falling of an active material can be prevented, and an electrolyte solution is favorably diffused thus giving rise to an advantageous effect that the stratification of an electrolyte solution can be suppressed (paragraph [0012]).

Patent document 2 describes that, to solve a problem that a portion of a negative electrode plate lug in the vicinity of a strap of the negative electrode plate lug is oxidized and corroded in the case of a lead-acid battery used under a severe condition where a liquid surface of an electrolyte solution is below a lower limit of a proper range (paragraphs [0004] to [0006]), "a porous material having corrosion resistance is disposed in the vicinity of a negative electrode plate lug in a state where the porous material is closely brought into contact with a surface of the lug" (Claim 1).

Further, Patent document 2 describes that, as an embodiment, a separator 3 and a glass mat 4 are inserted between a positive electrode plate and a negative electrode plate for preventing short circuiting, a strap is formed by a COS (cast-on-strap) method and, thereafter, a mat-form body 6 made of extra-fine glass fiber of approximately 1 µm in diameter is inserted so as to be brought into close contact with a surface of the lug of the negative electrode plate (paragraph [0009]). In this lead-acid battery, the negative electrode plate lug is brought into close contact with the porous material having fine pores holding an electrolyte solution. Accordingly, the lead-acid battery can acquire an advantageous effect that corrosion caused by oxidation can be suppressed (paragraph [0015]).

Patent document 3 describes the invention "whose object is to provide a battery which can eliminate time and effort for replenishment of water, can reduce a weight thereof by enabling the reduction of an amount of an electrolyte solution, and can prevent lowering of a time for sustaining an initial capacitance and low-temperature rapid discharge during gentle discharge unlike a negative absorption type lead-acid battery equipped with a control valve (paragraph [0014]). Patent document 3 describes "a lead-acid battery which has an plate group having a positive electrode plate and a negative electrode plate using a Pb-Ca alloy in a positive grid and a negative grid, wherein a first separator formed of a mat-like paper machine-made body mainly made of acid-resistant fibers such as glass fiber is arranged so as to come in contact with at least the negative electrode plate surface in the upper part of the plate group, and a second separator formed of a porous membrane made of an acid resistant resin such as polyethylene is arranged without arranging the first separator in the lower part of the plate group except for the upper part of the plate group.", and "In the upper part of the plate group, a three-layered separator formed of a center layer formed of the second separator and outer layers disposed on both surfaces outside the center layer and formed of the first separator is disposed between the positive electrode plate and the negative electrode plate, and in the lower part of the plate group, only the center layer formed of the second separator is disposed between the positive electrode plate and the negative electrode plate." (Claims 1, 3).

Patent document 3 also describes "In this lead-acid battery, even when a liquid surface of an electrolyte solution is lowered so that the negative electrode plate is exposed from the liquid surface of an electrolyte solution, the electrolyte solution is supplied to the negative electrode plate by a mat separator (first separator) disposed in contact with an upper portion of the negative electrode plate. Accordingly, the lead-acid battery can acquire an advantageous effect that an oxygen gas absorbing reaction progresses at such a portion so that the oxidation of the negative electrode plate and the reduction of moisture are suppressed (paragraph [0020]).

Patent document 4 describes the invention which overcomes a drawback that, in a lead-acid battery used under a severe condition, a base substrate of a separator and a cathode are brought into contact with each other thus giving rise to a drawback that a hole is formed in the separator thus causing penetration short-circuiting (line 15, right column, first page to line 3, left upper column, second page). To overcome such a drawback, the lead-acid battery uses a separator which has a glass mat on a portion of the lead-acid battery corresponding to an upper portion of a cathode plate (Claim (1)).

US-A-306405 describes a lead-acid battery comprising a plate group formed by stacking a positive electrode plate and a negative electrode plate with a separator sandwiched therebetween, an electrolyte solution and a container accommodating the plate group.

JP-A-H1126012 describes a safe and highly reliable lead-acid battery.

JP-A-2011181436 describes a lead acid battery improved in service life performance in use for idling start and stop (ISS) and initial performance in the lead acid battery for ISS.

### PRIOR ART DOCUMENTS

### PATENT DOCUMENTS

Patent Document 1: JP-A-2006-100082
Patent Document 2: JP-A-4-249064
Patent Document 3: JP-A-2007-87871
Patent Document 4: JP-A-4-95342

### SUMMARY OF THE INVENTION

### PROBLEMS TO BE SOLVED BY THE INVENTION

A battery used in a PSOC application has a drawback that specific gravity of an electrolyte solution is liable to be lowered due to stratification so that minute short circuiting occurs. Inventors of the present invention consider that a phenomenon is generated where concentration of lead ions in an electrolyte solution is increased along with lowering of the specific gravity of the electrolyte solution, and the lead ions are reduced in a charging step which follows such a step thus generating precipitation of lead crystals whereby minute conductive portions are generated between a negative electrode plate and a positive electrode plate.

On the other hand, there may be a case where a strap is formed by a COS method as a means for manufacturing a lead-acid battery. In the COS method, a recessed portion having the same shape as the strap is carved in a mold, molten lead produced by melting lead or a lead alloy is cast into the recessed portion, tips of plate lugs having the same polarity are immersed into the molten lead thus melting the lugs with heat of the molten lead and, thereafter, the molten lead is cooled and solidified thus integrating the solidified lead with the lugs.

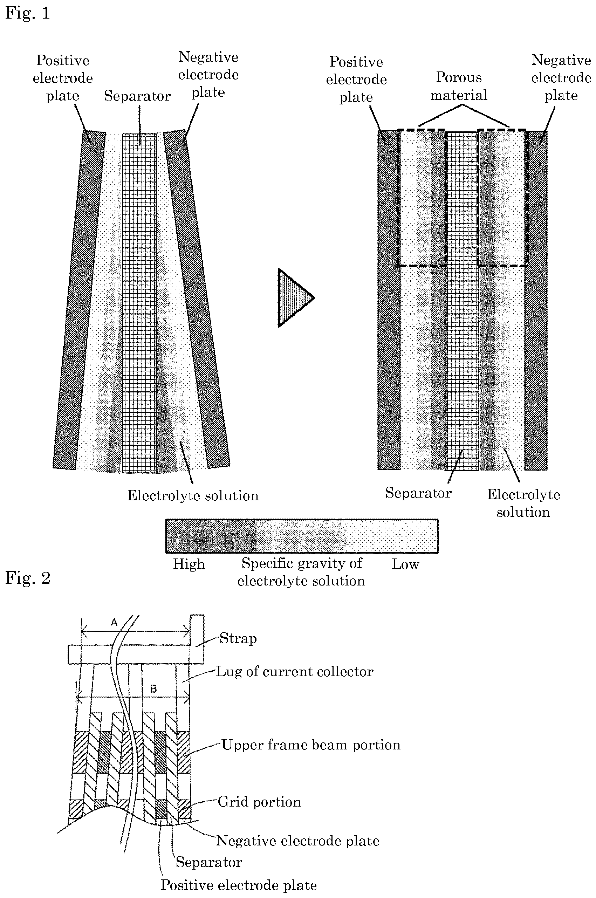

To surely realize integration of the lugs and the strap by melting in the COS method, it is necessary to form gaps through which molten lead flows into the recessed portion on an outer side of the lugs formed on both edges of the plate. Accordingly, a length A between outer ends of the lugs formed on both edges which are brought into contact with a lower surface of the strap shown in Fig. 2 (hereinafter referred to as "a lug group length A just below the strap" or "lug group length A", and also simply referred to as "length A" or "A") is set shorter than a length of the recessed portion of the mold, that is, a length of the strap.

Also in the COS method, when a shape of a mold is not changed and a thickness size of a plate group in a stacking direction becomes relatively large due to the increase of a plate thickness or the like, a size B of an upper portion of the plate group shown in Fig. 2 in the stacking direction, to be more specific, a length B between outer ends in a stacking direction of upper frame beam portions in current collectors of plates positioned on both ends among the plates connected to the strap (hereinafter referred to as "upper plate group length B" , and also simply referred to as "length B" or "B") is set long compared to the lug group length A just below the strap.

The inventors of the present invention found a phenomenon that places where the above-mentioned permeation short-circuiting occurs are formed at high frequency on an upper portion of the plate group, and particularly regions in the vicinity of upper ends of the upper portion of the plate group. The inventors of the present invention also made studies on a magnitude relationship between the lug group length A and the upper plate group length B, and found that the above-mentioned phenomenon becomes apparent when a relationship of A < B is adopted. In addition to such findings, the inventors of the present invention also found that high rate discharge characteristics at low temperature is enhanced although permeation short-circuiting resistance performance is lowered when a relationship of A < B is adopted. When a relationship of A ≥ B is adopted, permeation short-circuiting is suppressed compared to the case of the relationship where A < B is adopted. However, to establish the relationship of A ≥ B, it is necessary to increase a size of the strap compared to the case where the relationship of A < B is adopted. As a result, for example, following drawbacks may occur. A material cost is pushed up. It is necessary to update a mold. It is difficult to accommodate plates in the inside of a container having a predetermined size prescribed in JISD5301.

The lead-acid battery described in patent document 1 includes, besides the bag-like separator made of a synthetic resin, the felt-like separator (glass mat) which is disposed between the positive electrode plate and the negative electrode plate disposed adjacently to each other (also referred to as "between the plates"). On the other hand, the lead-acid battery described in patent document 2 includes the glass mat 4 and the mat-like body 6 made of extra-fine glass fiber between the plates besides the separator 3.

However, a drawback is not recognized that permeation short-circuiting resistance performance is lowered in the case where the plate lug and the strap are welded to each other by a COS method and a relationship of A < B is adopted between the lug group length A and the upper plate group length B.

In the lead-acid battery described in patent documents 3, 4, the resin-made separator (second separator or synthetic resin-made separator) is disposed between the plates, the glass mat is formed between the above-mentioned separator and either one of the positive and negative plates at an upper portion of the plate group. However, neither patent document 3 nor patent document 4 describes a COS method, and neither patent document 3 nor patent document 4 suggests a magnitude relationship between a lug group length A just below the strap and an upper plate group length B.

It is an object of the present invention to enhance permeation short-circuiting resistance performance in a lead-acid battery where a relationship of A < B is adopted.

### MEANS FOR SOLVING THE PROBLEMS

The present invention provides a following means to overcome the above-mentioned drawbacks.

According to a first aspect of the present invention, there is provided a lead-acid battery which includes: a plate group formed by stacking a positive electrode plate and a negative electrode plate with a separator sandwiched therebetween; an electrolyte solution; and a container accommodating the plate group, characterized in that:
a length A between outer ends of lugs on both edges just below at least one of a positive electrode strap or a negative electrode strap is smaller than a length B between outer end surfaces of upper frame beam portions of the plates positioned on both ends among the plates connected to at least one of the straps, and wherein
the length A and the length B are sizes after the plate group is accommodated in the container and are converted, and in a state where the battery is in a fully charged state, and wherein
a porous layer is formed at least one of between the separator and the positive electrode plate and between the separator and the negative electrode plate.

### ADVANTAGES OF THE INVENTION

According to a first aspect of the present invention, it is possible to provide a lead-acid battery where permeation short-circuiting can be suppressed.

### BRIEF DESCRIPTION OF THE DRAWINGS

Fig. 1 is a conceptual view of a gradient of sulfuric acid specific gravity between plates at the time of discharging according to the present invention and a prior art.
Fig. 2 is an explanatory view of a lug group length A just below a strap and an upper plate group length B.
Fig. 3 is an explanatory view of an expand-type current collector.
Fig. 4 is an explanatory view of a cast-type current collector.
Fig. 5 is an explanatory view of a position where a porous layer is disposed.
Fig. 6 is a graph showing a relationship between a thickness of a porous layer, a contact ratio between the porous layer and a plate, and a permeation short-circuiting occurrence rate.
Fig. 7 is a graph showing a relationship between a thickness of a porous layer, a contact ratio between the porous layer and a plate, and high rate discharge performance at low temperature.

### MODE FOR CARRYING OUT THE INVENTION

Hereinafter, an embodiment of the present invention is described. In carrying out the present invention, the embodiment can be suitably changed in accordance with a common knowledge of those who are skilled in the art and the disclosure of the prior art. Hereinafter, a negative electrode material is referred to as a negative active material, and a positive electrode material is referred to as a positive active material. A negative electrode plate is formed of a negative electrode current collector and a negative active material, and a positive electrode plate is formed of a positive electrode current collector and a positive active material (positive electrode material). Assume that solid components other than the current collector belong to the active material (electrode material).

A lead-acid battery according to the present invention includes a plate group which is formed of: a negative electrode plate where lead is used as an active material; a positive electrode plate where lead dioxide is used as an active material; and a porous separator interposed between these plates, for example. The plate group is accommodated in the inside of a container, and is immersed in an electrolyte solution having fluidity and containing a dilute sulfuric acid as a main component.

The negative electrode plate and the positive electrode plate are respectively formed by filling a paste-like active material in a grid portion of a current collector made of a Pb-Sb based alloy, a Pb-Ca based alloy, a Pb-Ca-Sn based alloy or the like. Known members can be suitably and selectably used as these constitutional members corresponding to a purpose or a usage.

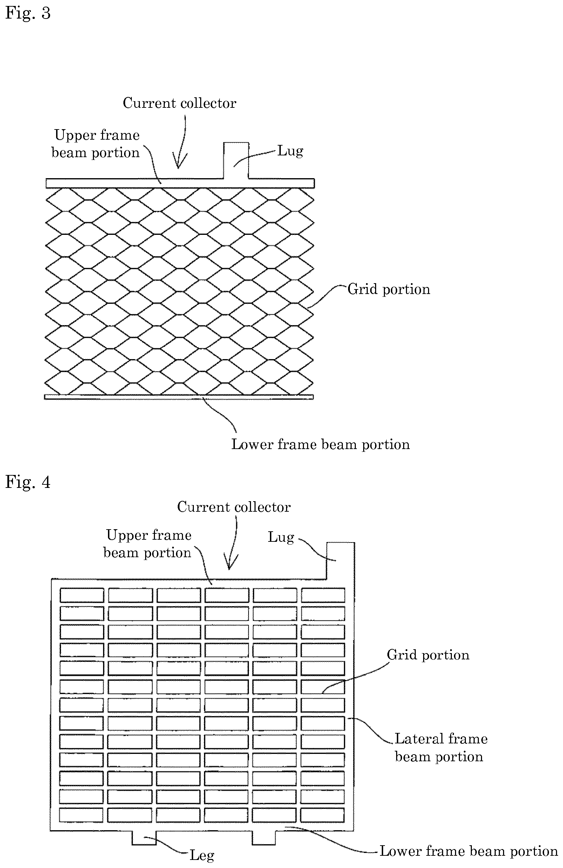

When the current collector is an expand-type current collector as shown in Fig. 3, the current collector includes: a grid portion in which an active material is filled; an upper frame beam portion continuously connected to an edge of the grid portion; a lower frame beam portion; and lugs projecting from the upper frame beam portion. When the current collector is a cast-type current collector shown in Fig. 4, the current collector further includes lateral frame beam portions and legs projecting from the lower frame beam portion.

The separator according to the present invention is provided for separating the positive electrode plate and the negative electrode plate from each other, and a separator which is used as a separator of a flooded-type lead-acid battery in general can be used as the separator according to the present invention. In the present invention, as the separator, for example, a sheet having minute pores and containing polyolefin as a main component, or a mat containing resin-made or glass-made fibers as a main component can be used. Particularly, from a view point of handling property and a cost, it is preferable to use the sheet having minute pores and containing polyethylene as a main component. A sheet having minute pores and containing polyolefin as a main component has a tendency where lead metal precipitates in the inside of the minute pores compared to a mat containing resin-made or glass-made fibers as a main component. Accordingly, the significance of using the sheet having minute pores and containing polyolefin as a main component in the present invention is large. A shape of the separator may be a bag-like shape or a flat plate-like shape. In case of a bag-like separator, either one of the positive electrode plate or the negative electrode plate may be accommodated in the inside of the bag.

In the present invention, the positive electrode plate and the negative electrode plate are stacked with the separator interposed therebetween, and a porous layer is interposed at least one of between the positive electrode plate and the separator or between the separator and the negative electrode plate. The porous layer may be any porous layer provided that such a porous layer has a function of separating a surface of the plate in the vicinity of an upper portion and a surface of the separator. From a view point of oxidation resistance property, the porous layer may preferably be made of substantially the same material for forming the separator used in the present invention. The porous layer according to the present invention preferably has a large number of pores. Since the porous layer has a large number of pores and hence, the porous layer can increase fluidity of an electrolyte solution in the porous layer compared to a layer having no pores. As the porous layer of the present invention, to be more specific, a porous synthetic resin film or a porous glass-made mat can be used. It is considered that the glass-made mat has a function of retaining an electrolyte solution thus properly suppressing the diffusion of the electrolyte solution and hence, stratification caused by precipitation of a sulfuric acid during charging can be made small.

According to the lead-acid battery of the present invention, a lug group length A just below at least one strap out of the positive electrode strap and the negative electrode strap is set smaller than an upper plate group length B of the plate connected to the above-mentioned at least one strap. As shown in Fig. 2, the length A is a length between outer ends of the lugs at both ends which are in contact with a lower surface of the strap. As shown in Fig. 2, the length B is a length between outer ends in a stacking direction of upper frame beam portions of current collectors of the plates positioned at both ends out of the plates connected to the strap. The length A and the length B are sizes in a state where the plate group is accommodated in the container, and is after being converted, and is in a fully charged state. The measurement of these sizes can be performed in a state where the plate group is taken out from the container by simply setting a size of the plate group in a stacking direction substantially equal to the corresponding sizes at the time of accommodating the plate group in the container.

In the present invention, by adopting the relationship of A < B, the strap can be formed in a compact shape. As a result, it is possible to acquire the following advantageous effects. For example, a material cost can be reduced. It is unnecessary to change a mold even when sizes of the plate group are changed. Even when the plate group is elongated in a stacking direction by filling a larger amount of active material in the container, it is possible to accommodate the plate group in a container having a predetermined size stipulated in JISD5301. In the present invention, the difference between the length A and the length B can be set to 1 mm or more, and it is preferable that the difference between the length A and the length B be set to 3 mm or more for making the advantageous effects of the present invention more apparent.

By interposing the porous layer of the present invention between the separator and the plate, the lead-acid battery of the present invention can acquire an advantageous effect of suppressing the occurrence of permeation short-circuiting. It is considered that this advantageous effect is brought about by preventing a surface of the electrode and the separator from coming into contact with each other or by preventing the separator from coming into contact with a low specific gravity region estimated to be disposed on a surface of the plate and in the vicinity of the surface of the plate. It is recognized that the above-mentioned advantageous effect becomes more apparent when A < B is adopted as the relationship between the length A and the length B. This is because, in this case, compared to the case where the relationship of A ≥ B is adopted, frequency that permeation short-circuiting occurs on the plate is high. That is, an effect of suppressing permeation short-circuiting by the porous layer can be clearly recognized. When the relationship of A ≥ B is adopted, frequency of the occurrence of such permeation short-circuiting is at a level that the permeation short-circuiting minimally occurs basically or at a low level and hence, a phenomenon that permeation short-circuiting occurs in an upper portion of the plate group and, particularly in the vicinity of an upper end of the plate group has not been known. Accordingly, it is considered that manufacturers and users having no such recognition do not recognize the phenomenon to an extent that the manufacturers and the users can distinguish such a phenomenon from permeation short-circuiting and defect causes at other places.

In the present invention, the lead-acid battery includes the porous layer and adopts the relationship of A < B and hence, the lead-acid battery of the present invention can acquire both an advantageous effect of suppressing permeation short-circuiting in the upper portion of the plate and an advantageous effect of forming the strap in a compact shape. The phenomenon that permeation short-circuiting occurs in a concentrated manner in a limited portion referred to as the upper frame beam peripheral portion of the upper portion of the plate by adopting the relationship of A < B is a phenomenon which was found out by the inventors of the present invention for the first time. Accordingly, it is safe to say that an advantageous effect that such a drawback can be improved by using the porous layer is also an advantageous effect which has been recognized for the first time by the inventors of the present invention.

The present invention is preferably applicable to a lead-acid battery for an idling stop vehicle. This is because a lead-acid battery for an idling stop vehicle is used under a PSOC condition and hence, the lead-acid battery for the idling stop vehicle exhibits high probability of the permeation short-circuiting occurring compared to batteries for other applications. As a result, the significance in applying the present invention to a lead-acid battery for an idling stop vehicle is large.

Further, there are advantageous effects which can be acquired for the first time by properly applying the present invention to a lead-acid battery for an idling stop vehicle. A lead-acid battery for an idling stop vehicle requires a large amount of active material for achieving a high charge acceptance performance compared to a lead-acid battery for a non-idling stop vehicle application. As a result, a size in a stacking direction (for example, a length B) of a plate group is liable to become large. In the manufacture of a battery which uses such a plate group, when the relationship of A = B or the relationship of A > B is adopted, a strap becomes large-sized and hence, there may be a case where accommodation of the plate group into a container becomes difficult. Particularly, in a battery of a type stipulated in JISD5301, an upper limit is set with respect to a container size and hence, there may be a case where a battery cannot be substantially manufactured when a strap is excessively long. To the contrary, when the relationship of A < B is adopted, it is unnecessary to make the strap large sized and hence, even when a size of the plate group in a stacking direction is increased, a drawback that the accommodation of the plate group in the container becomes difficult can be solved. Accordingly, in the present invention, the lead-acid battery includes the porous layer, the relationship of A < B is adopted, and the lead-acid battery is used as a lead-acid battery for an idling stop vehicle. Accordingly, the lead-acid battery according to the present invention can acquire at the same time, an advantageous effect of suppressing permeating short-circuiting in the upper portion of the plate, an advantageous effect of forming the strap in a compact shape, and an advantageous effect of enabling a design which allows the electrode group suitable for the idling stop vehicle application in a limited space formed in the container. That is, by adopting the present invention for the first time, it is possible to manufacture a lead-acid battery where permeation short-circuiting in the upper portion of the plate can be suppressed and which has a sufficient amount of active material as a lead-acid battery for an idling stop vehicle.

In the case where a glass made mat is used as the porous layer in the present invention, it is preferable that an average fiber diameter of the glass fibers be set to 1.2 µm to 25 µm inclusive. By setting the average fiber diameter to 1.2 µm or more, it is possible to suppress a tendency that high rate discharge performance and charge acceptance performance are lowered. By setting the average fiber diameter to 25 µm or less, life performance of the porous layer can be largely enhanced.

In the present invention, the plurality of plates which form the plate group is integrally formed with the lugs of the plates having the same polarity in such a manner that the lugs are connected to the plates by welding using a COS method. A portion where the plurality of plates are integrally formed with the lugs of the plates by welding forms a strap. When a plurality of cell chambers exist in the inside of the container, an inter-cell connecting portion which connects between battery cells disposed adjacently to each other, and a pole connected to a terminal of the battery are respectively continuously connected to the strap. When the container has a single cell structure, a pole is continuously connected to the strap.

The strap, the inter-cell connecting portion, and the pole are formed by using a Pb-Sn based alloy, a Pb-Sb based alloy or the like, for example.

In the present invention, since the strap is formed by a COS method, the lug group length A just below the strap is set smaller than the upper plate group length B, and the porous layer is formed at least one of between the separator and the positive electrode plate and between the separator and the negative electrode plate.

As shown in Fig. 2, the lug group length A is a length between outer end surfaces of the lugs positioned at both edges out of the lugs connected to the strap. As shown in Fig. 2, the upper plate group length B is a length between outer ends in a stacking direction of upper frame beam portions of the plates positioned at both ends out of the plates connected to the strap.

The following are estimated as an action and a function of the present invention which enhances permeation short-circuiting resistance performance. A lead-acid battery used in a PSOC state is liable to be brought into an overdischarge state and hence, a sulfuric acid is consumed due to a discharge reaction in the vicinity of a surface of the plate thus forming a region where an electrolyte solution has low specific gravity region. In the case where the relationship of A < B is adopted between the lug group length A just below the strap and the upper plate group length B in the lead-acid battery which adopts a COS method, as shown in a left side of Fig. 1, a distance between the plates at upper portions of the plates is liable to be narrow and hence, the separator cannot be separated from the low specific gravity region. Accordingly, an amount of lead ions is increased in an electrolyte solution having low specific gravity, and the lead ions are reduced and precipitated by the negative electrode during charging and hence, dendrite is grown whereby permeation short-circuiting through which lead permeates the inside of the separator is accelerated. According to the present invention, due to the formation of the porous layer, as shown in a right side of Fig. 1, the separator can be separated from the low specific gravity region in the vicinity of the surface of the plate. Accordingly, it is estimated that the concentration of lead ion on the surface of the separator and the inside of the separator is minimally increased and hence, the occurrence of permeation short-circuiting can be suppressed.

In the present invention, it is preferable that the porous layer be disposed between the positive electrode plate and the separator and between the separator and the negative electrode plate. By disposing the porous layer on both sides of the separator, permeation short-circuiting resistance performance can be enhanced compared to the case where the porous layer is disposed on one side of the separator. It is estimated, with such a configuration, the position of the separator can be maintained in the vicinity of the center between the plates and hence, a distance can be ensured between the separator and a reaction surface of the positive plate and between the separator and a reaction surface of the negative plate whereby a growth of dendrite in the separator can be suppressed more effectively, and permeation short-circuiting resistance performance can be enhanced more effectively.

In the present invention, with respect to a thickness of the porous layer, as described later in a present invention example, it is preferable to set the thickness of the porous layer to 0.05 mm or more from a viewpoint of making the porous layer surely exhibit an action of suppressing permeation short-circuiting. It is more preferable to set the thickness of the porous layer to 0.1 mm or more from a viewpoint of acquiring an excellent permeation short-circuiting suppression effect. It is estimated that by preventing the porous layer from becoming excessively thin, the separator can be separated from the low specific gravity region with an appropriate distance. It is preferable that the thickness of the separator be set to 0.3 mm or less for accommodating the separator between the plates. The thickness of the separator is measured in accordance with SBA S 0406 of BATTERY ASSOCIATION OF JAPAN in a state where a pressure of 19.6 KPa is applied to the separator.

In the present invention, it is preferable that a portion of the porous layer exceeding 50% of an area where the porous layer is brought into contact with the plate exist within a region of an upper 50% portion of the plate group. The upper portion of the plate group is set with reference to a height of a grid portion of the plate. Accordingly, it is preferable that the above-mentioned portion of the porous layer exist in a region corresponding to the upper 50% portion of the grid portion.

The region where the porous layer exists is not limited to the upper portion of the plate group, and it is possible to acquire an effect to some extent with respect to permeation short-circuiting resistance performance no matter which region the porous layer exists. However, it is preferable that the porous layer exist at the upper portion of the plate group to acquire a larger effect with respect to permeation short-circuiting resistance. It is considered that by disposing the porous layer on the upper portion of the plate group, compared to a case where the porous layer is disposed on a lower portion of the plate group, it is possible to surely separate the separator from a low specific gravity region of an electrolyte solution in the vicinity of a surface of the electrode plate. It is also considered that a low specific gravity region is formed in the upper portion compare to the lower portion due to the stratification and hence, permeation short-circuiting is more likely to occur in the upper portion. By disposing the porous layer at the upper portion of the positive electrode plate, ion conduction resistance in the upper portion of the plate is increased so that the lead-acid battery approaches a state where charging or discharging is generated uniformly regardless of the portion of the plate in a vertical direction. Accordingly, it is estimated that softening and removal of an active material at the upper portion of the positive electrode plate can be suppressed and hence, the stratification of an electrolyte solution can be also suppressed.

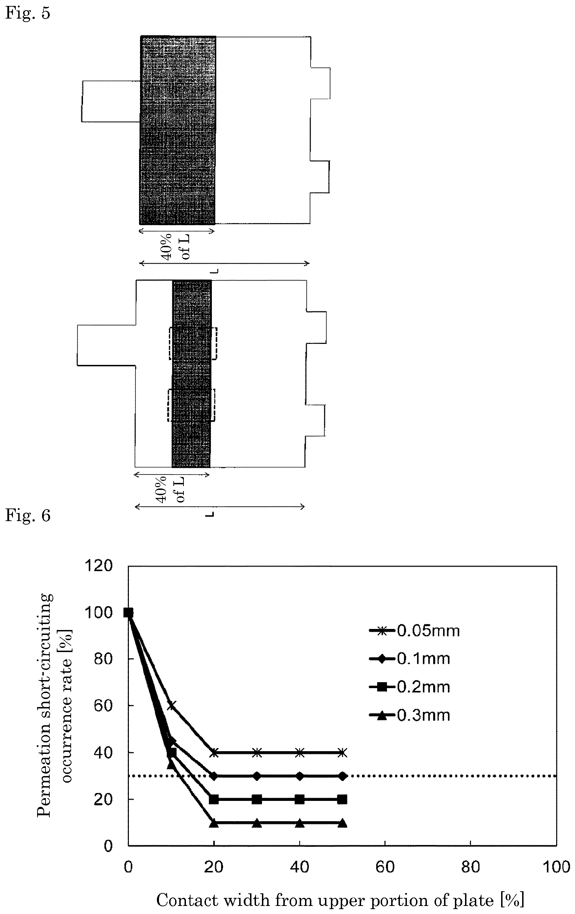

It is preferable that a portion of the porous layer exceeding 50% of an area where the porous layer is brought into contact with the plate exist within an upper 40% portion of the plate group. That is, it is preferable that the above-mentioned portion of the porous layer exist in a region corresponding to the upper 40% portion of the grid portion of the plate. To be more specific, the porous layer may exist in a whole region within the upper 40% with respect to a height L of the grid portion as shown in a right side of Fig. 5, or the porous layer may exist in a part of the region within the 40% as shown in a left side of Fig. 5. Further, as indicated by a dotted line, provided that the above-mentioned portion of the porous layer exists within the upper 40% portion, the porous layer may exist beyond the region within the upper 40% portion or may be dispersed. The same goes for the case where the above-mentioned portion of the porous layer exists within the region of the upper 50% portion.

When a ratio of the porous layer between the plates is small, an effect of separating the separator from the low specific gravity region on the surface of the plate is small and hence, it is considered that an effect of suppressing permeation short-circuiting is decreased. However, the lower a ratio of the porous layer between the plates, the lower the increase of a reaction resistance becomes between the plates. Accordingly, it is estimated that initial performance can be made small, and lowering of high rate discharge performance at low temperature and charge acceptance performance can be made small.

### EXAMPLE

Hereinafter, a present invention example and a comparison example are described.

### <Example: batteries A2 to A33>

### (Positive active material)

A positive electrode paste is prepared by mixing lead oxide, synthetic resin fibers which form a reinforcing material, water and a sulfuric acid by a ball mill method. This paste is filled in an expand-type grid-shaped positive electrode current collector made of an antimony-free Pb-Ca-Sn based alloy, is aged and dried thus producing a non-converted positive electrode plate having a width of 100 mm, a height of 110 mm and a thickness of 1.6 mm.

### (Negative active material)

A negative electrode paste is prepared by mixing lead oxide, flaky graphite, barium sulfate, lignin, synthetic resin fibers which form a reinforcing material, water and a sulfuric acid by a ball mill method. This paste is filled in an expand-type negative electrode grid made of an antimony-free Pb-Ca-Sn based alloy, is aged and dried thus producing a non-converted negative electrode plate having a width of 100 mm, a height of 110 mm and a thickness of 1.3 mm. Mixing amounts of flaky graphite, barium sulfate, lignin and synthetic resin fibers are adjusted such that the content of flaky graphite becomes 2 mass%, the content of barium sulfate becomes 0.6 mass%, the content of lignin becomes 0.2 mass% and the content of synthetic resin fibers becomes 0.1 mass% after conversion and in a state where the battery is fully charged.

### (Separator)

A bag-like separator made of a synthetic resin which uses a polyethylene sheet having a base thickness of 0.2 mm, and a rib height of 0.3 mm as a base substrate is prepared, the negative electrode plate is accommodated in the bag, and the rib is made to opposedly face the positive electrode plate.

### (Battery configuration)

6 pieces of positive electrode plates and 7 pieces of negative electrode plates which are respectively accommodated in the bag-like separators are alternately stacked such that the negative electrode plates are disposed outside. As shown in Table 2, in one of or both of between the separator and the positive electrode plate and between the separator and the negative electrode plate, a glass mat having a porous layer thickness shown in Table 2 is disposed at a porous layer contact position also shown in Table 2. The glass mat is mounted in a mode where a contact area ratio with respect to a total area of a grid portion and a ratio of a contact length with respect to a height L of the grid portion become equal (See the right side in Fig. 5. For example, a state where an area ratio from an upper portion of a grid is 40% means, as shown in the right side of Fig. 5, a state where the glass mat covers a whole surface of the plate which falls within a distance of 40% in a downward direction from an upper end of an upper frame beam portion of the plate (assuming a distance to a lower end of a lower frame beam portion as 100%).

A plate group where lugs of the positive electrode plates are welded to each other by a positive strap and lugs of the negative electrode plates are welded to each other by a negative strap by a COS method is formed such that a relationship of A < B is adopted. The plate group is accommodated in the container made of polypropylene, and a sulfuric acid is added thus applying a container conversion whereby A2 to A33 which are flooded-type lead-acid batteries where an electrolyte solution has a post-conversion specific gravity of 1.285 and a capacitance 5 hR is 30 Ah are prepared. In the inside of the container, 6 pieces of plate groups are connected to each other in series. A battery for confirming sizes is additionally prepared, the container conversion is performed and, thereafter, the battery is fully charged and, thereafter, a lid is removed, and a lug group length A on a positive electrode side and an upper plate group length B on a negative electrode side are respectively measured. With respect to the battery where the relationship of A < B is adopted in both a positive electrode side and a negative electrode side, the battery is expressed as "A < B" in the following table. With respect to the battery where the relationship of A = B is adopted in both a positive electrode side and a negative electrode side, the battery is expressed as "A = B" in the following table. With respect to the battery where the relationship of A > B is adopted in both a positive electrode side and a negative electrode side, the battery is expressed as "A> B" in the following table.

### (High rate discharge performance at low temperature test)

After completion of full charging, the above-mentioned flooded-type lead-acid battery is left in a cooling chamber at a temperature of -15°C ± 1°C for 16 hours or more and, thereafter, a discharge time until a terminal voltage is lowered to 6 V at a discharge current of 150 A is recorded (in accordance with a high rate discharge characteristics test stipulated in JIS D5301).

### (Permeation short-circuiting test)

In addition to the above-mentioned flooded-type lead-acid battery which is subjected to the high rate discharge performance at low temperature test, a flooded-type lead-acid battery is newly prepared. Steps 1 to 5 shown in Table 1 are performed on the flooded-type lead-acid battery in a constant temperature water bath at a temperature of 25°C and, thereafter, the battery is disassembled so as to check the presence or the non-presence of short-circuiting. With respect to the respective present invention examples and the respective comparison examples, 20 pieces of lead-acid batteries are tested and an occurrence ratio of permeation short-circuiting is evaluated.

**[Table 1]**

| Step | Content | Test condition | | Temperature | Remarks |
|---|---|---|---|---|---|
| | | Current, voltage | Termination condition | | |
| 1 | CC discharge | 0.05 CA | 1.0 V/cell | Water at 25°C | |
| 2 | Left resistance | 10 Ω | 28 days | Water at 25°C | |
| 3 | CV charge | 2.4 V/cell, maximum: 50 A | 10 min. | Water at 25°C | |
| 4 | CC charge | 0.05 CA | 27 h | Water at 25°C | Approximately 1 month elapsed to reach this step (1 cycle) |
| 5 | Repetition of steps 1 to 4 | Net 5 times | | Water at 25°C | |

### <Comparison example 1>

A battery A1 according to a comparison example 1 is prepared in the same manner as the present invention example except for that a glass mat is not mounted in the comparison example 1.

### <Comparison examples 2, 3>

A battery X and a battery Y are prepared in the same manner as the comparison example 1 except that a plate group is prepared such that a plate has a small thickness and a relationship of A > B or a relationship of A = B is adopted.

Properties of A1 to A33, and properties of the X, Y batteries are shown in Table 2.

"Low temperature HR performance" shown in Table 2 indicates a ratio under a condition that a discharge time of the battery A1 is set to 100% in the above-mentioned high rate discharge performance at low temperature test. "Permeation short-circuiting occurrence rate" is indicated at an interval of 5%.

**[Table 2]**

| | Size relationship between lug group length A just below strap and group length B at upper frame portion of plate | Porous layer contact plate | Porous layer contact position | Porous layer thickness | Low temperature HR performance | Permeation short-circuiting | Remarks |
|---|---|---|---|---|---|---|---|
| | | | Area ratio from upper portion of grid portion [%] | [mm] | A1 ratio [%] | Occurrence ratio [%] | |
| X | A>B | Not present | - | - | 98 | 0 | Comparative Example 2 |
| Y | A=B | Not present | - | - | 99 | 50 | Comparative Example 3 |
| A1 | | Not present | - | - | 100 | 100 | Comparative Example 1 |
| A2 | | Positive electrode plate | 20 | 0.05 | 99 | 90 | Example |
| A3 | | | | 0.1 | 99 | 85 | Example |
| A4 | | | 40 | 0.2 | 95 | 60 | Example |
| A5 | | | 100 | 0.3 | 93 | 40 | Example |
| A6 | | Negative electrode plate | 20 | 0.05 | 99 | 90 | Example |
| A7 | | | | 0.1 | 99 | 85 | Example |
| A8 | | | 40 | 0.2 | 95 | 60 | Example |
| A9 | | | 100 | 0.3 | 93 | 40 | Example |
| A10 | | | 10 | 0.05 | 99.5 | 60 | Example |
| A11 | | | | 0.1 | 99 | 45 | Example |
| A12 | | | | 0.2 | 98 | 40 | Example |
| A13 | | | | 0.3 | 96 | 35 | Example |
| A14 | | | 20 | 0.05 | 99 | 40 | Example |
| A15 | | | | 0.1 | 98 | 30 | Example |
| A16 | A<B | | | 0.2 | 96 | 20 | Example |
| A17 | | | | 0.3 | 94 | 15 | Example |
| A18 | | | 30 | 0.05 | 97 | 40 | Example |
| A19 | | Positive electrode plate + negative electrode plate | | 0.1 | 96 | 30 | Example |
| A20 | | | | 0.2 | 94 | 20 | Example |
| A21 | | | | 0.3 | 92 | 10 | Example |
| A22 | | | 40 | 0.05 | 94 | 40 | Example |
| A23 | | | | 0.1 | 93 | 30 | Example |
| A24 | | | | 0.2 | 91 | 20 | Example |
| A25 | | | | 0.3 | 90 | 10 | Example |
| A26 | | | 50 | 0.05 | 89 | 40 | Example |
| A27 | | | | 0.1 | 88 | 30 | Example |
| A28 | | | | 0.2 | 86 | 20 | Example |
| A29 | | | | 0.3 | 84 | 10 | Example |
| A30 | | | 100 | 0.1 | 80 | 30 | Example |
| A31 | | | | 0.3 | 75 | 10 | Example |
| A32 | | | 30% from lower portion | 0.1 | 97 | 90 | Example |
| A33 | | | | 0.3 | 93 | 85 | Example |

From a result shown in Table 2, it is understood that the batteries A2 to A33 where a porous layer is formed at least one of between a separator and a positive electrode plate and between the separator and a negative electrode plate have an effect of suppressing permeation short-circuiting compared to the battery A1 where a porous layer is not formed. The fact that a permeation short-circuiting suppressing effect is acquired also by the battery A32 and the battery A33 means that even when the porous layer is disposed only on a lower portion, the battery can acquire a function of expanding a distance between the separator and the plate at an upper portion. The reason may be considered that, under a state where a contact point between a strap and a lug portion functions as a fulcrum, a distance between the separator and the plate at the upper portion is also expanded along with the expansion of the distance between the separator and the plate at the lower portion of the plate. Accordingly, it is not always necessary to dispose the porous layer in the vicinity of an upper end so that it is safe to say that the advantageous effect of the present invention can be acquired whatever position the porous layer is disposed.

Further, from the result shown in Table 2, it is understood that the batteries A2 to A9 where a porous layer is formed only one of between a separator and a positive electrode plate or between the separator and a negative electrode plate also have an effect of suppressing permeation short-circuiting compared to the battery A1 where a porous layer is not formed.

Still further, from the result shown in Table 2, when a comparison is made between the batteries having the same condition with respect to a porous layer contact position and a porous layer thickness, the batteries A10 to A31 where a porous layer is formed both of between a separator and a positive electrode plate and between the separator and a negative electrode plate have a larger effect of suppressing permeation short-circuiting than the batteries A2 to A9. This means that the advantageous effect of the present invention becomes apparent by disposing the porous layer on both surfaces.

It can be also understood that the batteries A18 to A21 where the porous layer is formed within a range of 30% from an upper portion can suppress permeation short-circuiting more effectively compared to the batteries A32, A33 where a porous layer is formed within a range of 30% from a lower portion.

To focus on the batteries A2 to A31, it is understood that although the batteries having a larger contact area ratio of the porous layer from the upper portion of the plate have a larger effect of suppressing permeation short-circuiting, the batteries having not so large contact area ratio are preferable from a viewpoint of maintenance of high rate discharge performance at low temperature.

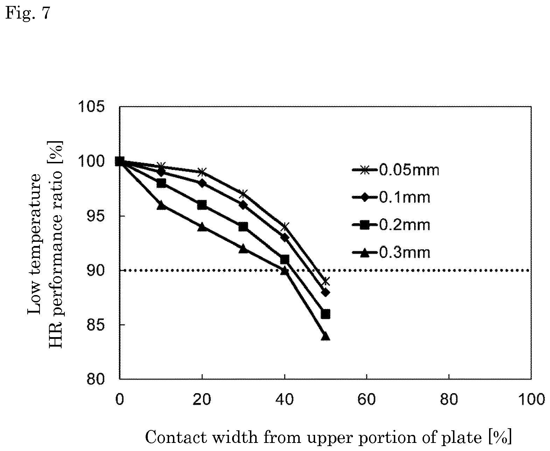

Fig. 6 and Fig. 7 show a change in a permeation short-circuiting occurrence ratio and a high rate discharge performance at low temperature (a low temperature HR performance ratio with respect to the battery A1) when a thickness of the porous layer and a contact area ratio are changed in the batteries of the present invention where the porous layer is formed both between the separator and the positive electrode plate and between the separator and the negative electrode plate. Such a change is shown in Fig. 6 and Fig. 7 also with respect to the battery A1 where the porous layer is not formed.

It is understood from Fig. 6 that when a thickness of the porous layer is 0.1 mm or more and a contact area ratio from the upper portion of the plate is 20% or more, the battery exhibits an excellent permeation short-circuiting occurrence rate of 30% or less, and the reduction of the permeation short-circuiting occurrence rate is not largely influenced even when the contact is increased further.

On the other hand, it is understood from Fig. 7 that when a contact area ratio from the upper portion of the plate is 40% or less, the battery can maintain a low temperature HR performance ratio of 90% or more with respect to the battery A1 where the porous layer is not formed. Accordingly, it is preferable that the porous layer have a thickness of 0.1 mm or more, and it is also preferable that the porous layer be formed within 40% from the upper portion of a plate group.

To prove an advantageous effect acquired when the battery according to the present invention is used as a starter lead-acid battery for an idling stop vehicle, a battery life test is performed with respect to the battery A23 according to the embodiment of the present invention and the battery A1 having substantially the same configuration as the battery A23 except a point that the porous layer is not formed, and results of the battery life tests are compared to each other. The battery life test is performed such that each battery is put into a constant temperature bath at a temperature of 40°C, and the contents of steps 1 to 10 described in following Table 3 are repeatedly performed. Conditions of the respective steps are described in a test condition column in Table 3. The evaluation of lives is performed by comparing the number of cycles when a terminal voltage reaches 10.5 V In this test, the number of cycles is counted such that when the steps from the step 1 to the step 5 are performed one time, 1 cycle is completed. A charge-discharge test condition shown in Table 3 is a representative charge-discharge pattern of a lead-acid battery mounted on an idling stop vehicle. By performing such a battery test, it is possible to evaluate battery life performance (battery life performance under a so-called PSOC condition) of a lead-acid battery for an idling stop vehicle. As a result of this life test, the number of cycles when a terminal voltage of the battery A23 reaches 7.2 V is a value larger than the corresponding number of cycles of the battery A1 by approximately 10%. From this result, when the lead-acid battery having the porous layer and where the relationship of A < B is adopted is used as a lead-acid battery for an idling stop vehicle, the lead-acid battery can simultaneously acquire an effect of suppressing permeation short-circuiting at the upper portion of the plate, an effect of forming the strap in a compact manner, and an effect of prolongation life requested by a lead-acid battery for an idling stop vehicle.

**[Table 3]**

| Step | Content | Test condition | |
|---|---|---|---|
| | | Current condition or voltage condition | Termination condition |
| 1 | CC discharge | 1 CA | 59 s |
| 2 | CC discharge | 300 A | 1 s |
| 3 | CV charge | 14.4 V, 50 A | 10 s |
| 4 | CC discharge | 1 CA | 5 s |
| 5 | Repetition of steps 3, 4 | 5 times | |
| 6 | Repetition of steps 1 to 5 | 50 times | |
| 7 | CV charge | 14.4 V, 50 A | 900 s |
| 8 | Repetition of steps 1 to 7 | 72 times | |
| 9 | Stop | 15 h | |
| 10 | Return to step 1 | - | |

Techniques disclosed in this specification can be realized in various forms. For example, the technique disclosed in the present invention can be realized in the following modes.

The present invention discloses:
(1) A lead-acid battery which includes: a plate group formed by stacking a positive electrode plate and a negative electrode plate with a separator sandwiched therebetween; an electrolyte solution; and a container accommodating the plate group, characterized in that: a length A between outer ends of lugs on both edges just below at least one of a positive electrode strap or a negative electrode strap is smaller than a length B between outer ends in a stacking direction of upper frame beam portions of the plates positioned on both ends among the plates connected to at least one of the straps, and wherein the length A and the length B are sizes after the plate group is accommodated in the container and are converted, and in a state where the battery is in a fully charged state, and wherein a porous layer is formed at least one of between the separator and the positive electrode plate and between the separator and the negative electrode plate.

### INDUSTRIAL APPLICABILITY

In the present invention, when the lug group length A just below the strap is smaller than the upper plate group length B, permeation short-circuiting can be suppressed by increasing a distance between the separator and the plate. Accordingly, it is expected that the present invention is applied to a lead-acid battery and the like used in IS where the lead-acid battery is frequently used in a PSOC.

### DESCRIPTION OF REFERENCE SIGNS

A: lug group length just below strap
B length between outer ends in a stacking direction of upper frame beam portions of the plates positioned on both ends (upper plate group length)

## Claims

1. A lead-acid battery comprising: a plate group formed by stacking a positive electrode plate and a negative electrode plate with a separator sandwiched therebetween; an electrolyte solution; and a container accommodating the plate group, wherein a porous layer is formed at least one of between the separator and the positive electrode plate and between the separator and the negative electrode plate,
**characterized in that**:
a length A between outer ends of lugs on both edges just below at least one of a positive electrode strap or a negative electrode strap is smaller than a length B between outer ends in a stacking direction of upper frame beam portions of the plates positioned on both ends among the plates connected to at least one of the straps, and wherein
the length A and the length B are sizes in a state where the plate group is accommodated in the container, and is after being converted, and is in a fully charged state.

2. The lead-acid battery according to claim 1, wherein the porous layer is a porous synthetic resin film or a porous glass-made mat.

3. The lead-acid battery according to claim 2, wherein an average fiber diameter of glass fibers of the glass-made mat is 1.2 µm or more.

4. The lead-acid battery according to claim 2 or 3, wherein an average fiber diameter of glass fibers of the glass-made mat is 25 µm or less.

5. The lead-acid battery according to any one of claims 1 to 4, wherein the porous layer is formed both between the separator and the positive electrode plate and between the separator and the negative electrode plate.

6. The lead-acid battery according to any one of claims 1 to 5, wherein a thickness of the porous layer is 0.05 mm or more.

7. The lead-acid battery according to claim 6, wherein a thickness of the porous layer is 0.1 mm or more.

8. The lead-acid battery according to any one of claims 1 to 7, wherein a thickness of the porous layer is 0.3 mm or less.

9. The lead-acid battery according to any one of claims 1 to 8, wherein the porous layer is brought into contact with a whole surface of the plate.

10. The lead-acid battery according to any one of claims 1 to 8, wherein a portion of the porous layer exceeding 50% of an area which is brought into contact with the plate exists in a region which falls within 50% of an upper portion of the plate group.

11. The lead-acid battery according to any one of claims 1 to 8, wherein a portion of the porous layer exceeding 50% of an area which is brought into contact with the plate exists in a region which falls within 40% of an upper portion of the plate group.

12. The lead-acid battery according to any one of claims 1 to 11, wherein the length A is shorter than the length B by 1 mm or more.

13. The lead-acid battery according to claim 12, wherein the length A is shorter than the length B by 3 mm or more.

14. The lead-acid battery according to any one of claims 1 to 13, wherein the lead-acid battery is a lead-acid battery for an idling stop vehicle.

## Patentansprüche

1. Bleiakkumulator, umfassend: einen Plattenverbund, gebildet durch Stapeln einer Positivelektrodenplatte und einer Negativelektrodenplatte mit einem dazwischen eingelegten Separator; eine Elektrolytlösung; und einen den Plattenverbund aufnehmenden Behälter, wobei eine poröse Schicht ausgebildet ist zumindest eines von zwischen dem Separator und der Positivelektrodenplatte und zwischen dem Separator und der Negativelektrodenplatte,
**dadurch gekennzeichnet, dass**:
eine Länge A zwischen den äußeren Enden der Fahnen an beiden Rändern direkt unter mindestens einer von einer Positivelektrodenbrücke oder einer Negativelektrodenbrücke kleiner ist als eine Länge B zwischen den in einer Stapelrichtung äußeren Enden der oberen Rahmenholmteile der Platten, die von den Platten, die mit mindestens einer von den Brücken verbunden sind, an den beiden Enden positioniert sind, und wobei
die Länge A und die Länge B Abmessungen in einem Stadium, wo der Plattenverbund in dem Behälter aufegenommen ist und vorliegt, nachdem er umgewandelt ist, und sich in einem vollständig geladenen Zustand befindet, sind.

2. Bleiakkumulator nach Anspruch 1, wobei die poröse Schicht ein poröser Kunstharzfilm oder ein poröses, aus Glas hergestelltes Vlies ist.

3. Bleiakkumulator nach Anspruch 2, wobei ein mittlerer Faserdurchmesser der Glasfasern des aus Glas hergestellten Vlieses 1,2 µm oder mehr beträgt.

4. Bleiakkumulator nach Anspruch 2 oder 3, wobei ein mittlerer Faserdurchmesser der Glasfasern des aus Glas hergestellten Vlieses 25 µm oder weniger beträgt.

5. Bleiakkumulator nach einem der Ansprüche 1 bis 4, wobei die poröse Schicht sowohl zwischen dem Separator und der Positivelektrodenplatte als auch zwischen dem Separator und der Negativelektrodenplatte ausgebildet ist.

6. Bleiakkumulator nach einem der Ansprüche 1 bis 5, wobei eine Dicke der porösen Schicht 0,05 mm oder mehr beträgt.

7. Bleiakkumulator nach Anspruch 6, wobei eine Dicke der porösen Schicht 0,1 mm oder mehr beträgt.

8. Bleiakkumulator nach einem der Ansprüche 1 bis 7, wobei eine Dicke der porösen Schicht 0,3 mm oder weniger beträgt.

9. Bleiakkumulator nach einem der Ansprüche 1 bis 8, wobei die poröse Schicht mit einer gesamten Oberfläche der Platte in Kontakt gebracht ist.

10. Bleiakkumulator nach einem der Ansprüche 1 bis 8, wobei ein Teil der porösen Schicht, der 50 % einer Fläche, die mit der Platte in Kontakt gebracht ist, übersteigt, in einem Bereich, der innerhalb die 50 % eines oberen Teils des Plattenverbundes fällt, vorliegt.

11. Bleiakkumulator nach einem der Ansprüche 1 bis 8, wobei ein Teil der porösen Schicht, der 50 % einer Fläche, die mit der Platte in Kontakt gebracht ist, übersteigt, in einem Bereich, der innerhalb die 40 % eines oberen Teils des Plattenverbundes fällt, vorliegt.

12. Bleiakkumulator nach einem der Ansprüche 1 bis 11, wobei die Länge A um 1 mm oder mehr kürzer als die Länge B ist.

13. Bleiakkumulator nach Anspruch 12, wobei die Länge A um 3 mm oder mehr kürzer als die Länge B ist.

14. Bleiakkumulator nach einem der Ansprüche 1 bis 13, wobei der Bleiakkumulator ein Bleiakkumulator für ein Fahrzeug mit Leerlaufstopp ist.

## Revendications

1. Batterie au plomb-acide comprenant : un groupe de plaques formé en empilant une plaque d'électrode positive et une plaque d'électrode négative avec un séparateur pris en sandwich entre elles ; une solution d'électrolyte ; et un récipient recueillant le groupe de plaques, dans laquelle une couche poreuse est formée au moins une entre une solution parmi le séparateur et la plaque d'électrode positive et entre le séparateur et la plaque d'électrode négative,
**caractérisée en ce que** :
une longueur A entre des extrémités extérieures de cosses sur deux côtés juste en-dessous d'au moins un parmi un bracelet d'électrode positive ou un bracelet d'électrode négative est inférieure à une longueur B entre des extrémités extérieures dans une direction d'empilement de parties de faisceaux de cadre supérieur des plaques positionnées sur les deux extrémités entre les plaques connectées à au moins un des bracelets, et dans laquelle la longueur A et la longueur B sont des dimensions dans un état où le groupe de plaques est recueilli dans le récipient, et, après avoir été converti, est dans un état de charge complète.

2. Batterie au plomb-acide selon la revendication 1, dans laquelle la couche poreuse est un film de résine synthétique poreux ou un tapis poreux fait de verre.

3. Batterie au plomb-acide selon la revendication 2, dans laquelle un diamètre de fibre moyen des fibres de verre du tapis fait de verre est de 1,2 µm ou plus.

4. Batterie au plomb-acide selon la revendication 2 ou la revendication 3, dans laquelle un diamètre de fibre moyen des fibres de verre du tapis fait de verre est de 25 µm ou moins.

5. Batterie au plomb-acide selon l'une quelconque des revendications 1 à 4, dans laquelle la couche poreuse est formée à la fois entre le séparateur et la plaque d'électrode positive et entre le séparateur et la plaque d'électrode négative.

6. Batterie au plomb-acide selon l'une quelconque des revendications 1 à 5, dans laquelle une épaisseur de la couche poreuse est de 0,05 mm ou plus.

7. Batterie au plomb-acide selon la revendication 6, dans laquelle une épaisseur de la couche poreuse est de 0,1 mm ou plus.

8. Batterie au plomb-acide selon l'une quelconque des revendications 1 à 7, dans laquelle une épaisseur de la couche poreuse est de 0,3 mm ou moins.

9. Batterie au plomb-acide selon l'une quelconque des revendications 1 à 8, dans laquelle la couche poreuse est mise en contact avec une surface entière de la plaque.

10. Batterie au plomb-acide selon l'une quelconque des revendications 1 à 8, dans laquelle une partie de la couche poreuse dépassant 50 % d'une zone, qui est mise en contact avec la plaque, existe dans une région qui tombe dans 50 % d'une partie supérieure du groupe de plaques.

11. Batterie au plomb-acide selon l'une quelconque des revendications 1 à 8,
dans laquelle une partie de la couche poreuse dépassant 50 % d'une zone, qui est mise en contact avec la plaque, existe dans une région qui tombe dans 40 % d'une partie supérieure du groupe de plaques.

12. Batterie au plomb-acide selon l'une quelconque des revendications 1 à 11, dans laquelle la longueur A est plus courte que la longueur B de 1 mm ou plus.

13. Batterie au plomb-acide selon la revendication 12, dans laquelle la longueur A est plus courte que la longueur B de 3 mm ou plus.

14. Batterie au plomb-acide selon l'une quelconque des revendications 1 à 13, ladite batterie au plomb-acide étant une batterie au plomb-acide pour un véhicule à l'arrêt au ralenti.
